# EUROPÄISCHE PATENTSCHRIFT

(11) **EP 2 037 302 B1**
(45) Veröffentlichungstag und Bekanntmachung des Hinweises auf die Patenterteilung: **21.05.2014**
(21) Anmeldenummer: 08163250.7
(22) Anmeldetag: 29.08.2008
(51) Int. Cl.: G02B 7/00, G02B 21/24, G02B 21/00

(54) **Vorrichtung zur Drehwinkelbegrenzung eines drehbar gelagerten Objekts sowie optische Beobachtungseinrichtung**
Device for limiting the turning angle of a rotatable object and optical observation device
Dispositif de limitation de l'angle de rotation d'un objet installé de manière rotative et dispositif d'observation optique

(30) Priorität: 14.09.2007 DE 102007043845
(43) Veröffentlichungstag der Anmeldung: 18.03.2009
(73) Patentinhaber: Carl Zeiss Meditec AG, 07745 Jena (DE)
(72) Erfinder: Kolster, Daniel, 73447 Oberkochen (DE)
(74) Vertreter: Müller, Thomas

(56) Entgegenhaltungen:
- CH-A5- 696 382
- DD-A1- 227 202
- DE-A1- 2 346 327
- DE-A1- 10 338 498
- DE-A1-102004 025 590
- US-A- 3 615 068
- US-A1- 2005 063 053

## Beschreibung

Die vorliegende Erfindung betrifft zunächst eine Vorrichtung zur Drehwinkelbegrenzung eines drehbar gelagerten Objekts gemäß dem Oberbegriff von Patentanspruch 1. Weiterhin betrifft die Erfindung auch eine optische Beobachtungseinrichtung sowie besondere Verwendungen einer solchen Vorrichtung zur Drehwinkelbegrenzung.

Im Stand der Technik existieren unzählige Lösungen, bei denen Objekte jedweder Art drehbar gelagert sind, und bei denen es wünschenswert ist, die Drehbewegung in der ein oder anderen Weise zu begrenzen.

In der DE 103 38 498 A1 beispielsweise ist eine Lösung aus dem Bereich der Operationsmikroskope beschrieben. Bei dieser Lösung sind einzelnen Komponenten des Operationsmikroskops, hier ein Bedienelement, drehbar an einem Grundkörper angeordnet. Die Drehung erfolgt dabei über eine Kugelgelenkanordnung. Zusätzlich ist ein Mechanismus zur Drehbegrenzung vorgesehen, der durch entsprechende Ausnehmungen in der Kugelgelenkpfanne und der Kugelgelenkausnehmung gebildet wird, wobei die beiden Ausnehmungen gemeinsam ein Kulissenelement einschließen.

Eine auf einem anderen technischen Gebiet liegende Lösung ist beispielsweise in der DD 227 202 A1 beschrieben. In dieser Druckschrift ist eine Vorrichtung zur Drehwinkelbegrenzung offenbart, die ein oder zwei Anschläge aufweist. Diese Anschläge sind an einer Scheibe angeordnet und rechtwinklig abgebogen, so dass sie in eine Frontplatte eingreifen können.

Noch eine andere Lösung ist in der DE 23 46 327 A1 beschrieben. Dort ist eine Vorrichtung zur Drehwinkelbegrenzung offenbart, die Drehwinkel von wenigstens 360 Grad zulässt. Dies wird mittels eines Mitnahmehebels erreicht, dem ein Anschlag zugeordnet ist, der seinerseits zwischen zwei im Abstand zueinander angeordneten Anschlägen beweglich gehalten ist.

Andere Lösungen der Drehwinkelbegrenzung machen beispielsweise von der Verwendung entsprechender Bänder oder dergleichen Gebrauch.

Nachteilig bei den bekannten Lösungen ist, dass sie in der Regel konstruktiv aufwändig sind, was insbesondere im Hinblick auf die Robustheit, Haltbarkeit und die Herstellungskosten nachteilig ist. Bei einigen der bekannten Lösungen muss beispielsweise zusätzlicher Aufwand in die Lagerung einer zusätzlichen Scheibe mit Anschlägen gelegt werden. Weiterhin ist es in einigen Fällen wünschenswert, eine Drehwinkelbegrenzung in einem genau definierten Winkelbereich durchführen zu können, was mit den bekannten Lösungen nicht immer erreichbar ist, teilweise aber auch gar nicht gewollt ist.

Ausgehend vom genannten Stand der Technik liegt der vorliegenden Erfindung die Aufgabe zugrunde, eine Vorrichtung zur Drehwinkelbegrenzung der eingangs genannten Art derart weiterzubilden, dass auf konstruktiv einfache Weise eine Drehwinkelbegrenzung in einem genau definierten Winkelbereich erreicht werden kann. Weiterhin sollen eine entsprechend verbesserte Beobachtungseinrichtung bereitgestellt sowie besonders vorteilhafte Verwendungen für eine solche Vorrichtung angegeben werden.

Diese Aufgabe wird erfindungsgemäß gelöst durch die Vorrichtung zur Drehwinkelbegrenzung mit den Merkmalen gemäß dem unabhängigen Patentanspruch 1, die optische Beobachtungseinrichtung mit den Merkmalen gemäß dem unabhängigen Patentanspruch 11 sowie die besonderen Verwendungen gemäß den unabhängigen Patentansprüchen 13 und 14. Weitere Merkmale und Details der Erfindung ergeben sich aus den Unteransprüchen, der Beschreibung sowie den Zeichnungen. Dabei gelten Merkmale und Details, die im Zusammenhang mit der erfindungsgemäßen Vorrichtung beschrieben sind, selbstverständlich auch im Zusammenhang mit der erfindungsgemäßen optischen Beobachtungseinrichtung, und jeweils umgekehrt. Entsprechendes gilt für die erfindungsgemäßen Verwendungen.

Durch die erfindungsgemäße Ausgestaltung der Vorrichtung zur Drehwinkelbegrenzung wird ein einfacher Anschlag für eine Drehwinkelbegrenzung in einem genau definierten Bereich geschaffen, beispielsweise ein einfacher Anschlag zur Drehwinkelbegrenzung für eine Drehung von wenigstens 360 Grad. So kann beispielsweise eine Drehwinkelbegrenzung für eine volle 360 Grad Drehung, aber auch für eine Drehung größer 360 Grad, geschaffen werden. Selbstverständlich ist mittels der erfindungsgemäßen Vorrichtung auch ein Anschlag zur Drehwinkelbegrenzung für eine Drehung von kleiner als 360 Grad realisierbar.

Gemäß dem ersten Aspekt der Erfindung wird eine Vorrichtung zur Drehwinkelbegrenzung eines drehbar gelagerten Objekts bereitgestellt, aufweisend ein um eine Drehachse drehbar gelagertes Basiselement zur Aufnahme eines zu drehenden Objekts, sowie eine Einrichtung zur Drehwinkelbegrenzung. Die Vorrichtung ist erfindungsgemäß dadurch gekennzeichnet, dass die Einrichtung zur Drehwinkelbegrenzung einen um eine Schwenkachse drehbar gelagerten Schwenkanschlag aufweist, der auf dem Basiselement angeordnet ist, dass die Einrichtung zur Drehwinkelbegrenzung wenigstens einen, vorzugsweise zwei Anschläge zur Begrenzung der Schwenkbewegung des Schwenkanschlags aufweist und dass die Einrichtung zur Drehwinkelbegrenzung einen Gegenanschlag aufweist, der mit dem Schwenkanschlag zusammenwirkt.

Die erfindungsgemäße Vorrichtung weist zunächst ein Basiselement auf, welches zur Aufnahme beziehungsweise Befestigung eines zu drehenden Objekts dient. Dazu ist das Basiselement um eine Drehachse drehbar gelagert. Natürlich ist die Erfindung nicht auf bestimmte Ausgestaltungsformen für das Basiselement beschränkt. Solche Basiselemente sind an sich bereits aus dem Stand der Technik bekannt und den auf dem Gebiet tätigen Fachleuten geläufig. Im weiteren Verlauf der Beschreibung werden einige vorteilhafte, jedoch nicht ausschließliche Beispiele erläutert, wie ein solches Basiselement ausgestaltet sein kann.

Weiterhin verfügt die Vorrichtung über eine Einrichtung zur Drehwinkelbegrenzung. Diese Einrichtung ist erfindungsgemäß in besonderer Weise ausgestaltet.

Ein grundlegendes Merkmal sieht vor, dass die Einrichtung zur Drehwinkelbegrenzung einen um eine Schwenkachse drehbar gelagerten Schwenkanschlag aufweist. Dieser Schwenkanschlag ist auf dem Basiselement angeordnet. Die grundlegende Funktionsweise des Schwenkanschlags ist eine solche, dass dieser aus einer Ruhelage in Bezug auf die Ruhelage in beide Richtungen ausgeschwenkt werden kann. Insbesondere kann vorgesehen sein, dass dieser aus einer vertikalen oder schrägen Ruhelage ausgeschwenkt werden kann. Dies kann sowohl symmetrisch (der Anschlag kann in Bezug auf die Ruhelage in beide Richtungen gleich weit ausgeschwenkt werden) als auch asymmetrisch (der Anschlag kann in Bezug auf die Ruhelage in den beiden Richtungen unterschiedlich weit ausgeschwenkt werden) erfolgen. Der Schwenkanschlag entspricht in seiner Funktionsweise somit einer Art Pendel.

Wichtig dabei ist gemäß der vorliegenden Erfindung, dass der Schwenkanschlag auf dem Basiselement angeordnet ist, so dass der Schwenkanschlag bei der Drehung des Basiselements ebenfalls mitgedreht wird. Zusätzlich dazu kann der Schwenkanschlag auch noch um die Schwenkachse verschwenkt werden, so dass der Schwenkanschlag in zweifacher Hinsicht gedreht beziehungsweise verschwenkt wird, wobei insbesondere beide Schwenk- beziehungsweise Drehbewegungen unabhängig voneinander durchgeführt werden können. Wie das Verschwenken des Schwenkanschlags vorteilhaft erfolgen kann, wird anhand einiger vorteilhafter, jedoch nicht ausschließlicher Beispiele im weiteren Verlauf der Beschreibung näher erläutert.

Um die Schwenkbewegung des Schwenkanschlags in definierten Bahnen zu halten, verfügt die Einrichtung zur Drehwinkelbegrenzung über zwei oder mehr Anschläge. In einer vorteilhaften Ausführungsform können zwei Anschläge vorgesehen sein. In einer anderen vorteilhaften Ausführungsform können beispielsweise vier Anschläge vorgesehen sein. Auch hierzu werden im weiteren Verlauf einige vorteilhafte, jedoch nicht ausschließliche Beispiele beschrieben.

Schließlich verfügt die Einrichtung zur Drehwinkelbegrenzung über wenigstens einen Gegenanschlag, der mit dem Schwenkanschlag zusammenwirkt. Unter Zusammenwirken ist dabei zu verstehen, dass die beiden Anschläge zumindest zeitweilig in Kontakt miteinander stehen, ohne dass diese jedoch aneinander befestigt werden. Die beiden Anschläge liegen lediglich lose aneinander an. Gemäß der vorliegenden Erfindung können auch zwei Gegenanschläge vorgesehen sein. Dadurch kann insbesondere eine Drehwinkelbegrenzung für eine Drehung von weniger als 360 Grad realisiert sein. Je nach gewünschter Drehbegrenzung können die Gegenanschläge entsprechend beabstandet voneinander vorgesehen sein. Dabei ist auch denkbar dass die Gegenanschläge, von der Drehachse des Basiselements aus gesehen, unterschiedlich weit von dieser entfernt vorgesehen sind, so dass die Abstände von der Drehachse zu den beiden Gegenanschlägen unterschiedlich groß sind.

Durch die erfindungsgemäße Ausgestaltung der Einrichtung zur Drehwinkelbegrenzung wird erreicht, dass die physische Breite des Schwenkanschlags kompensiert werden kann, so dass die Drehung des Basiselements, und damit eines an/auf diesem befestigten Objekt, in gewünschter Weise begrenzt werden kann, beispielsweise auf volle 360 Grad, auf Winkel größer 360 Grad, aber natürlich auch auf Winkel kleiner 360 Grad.

Bei der Vorrichtung zur Drehwinkelbegrenzung kann grundsätzlich vorgesehen sein, dass der wenigstens eine Anschlag separat vom Basiselement vorgesehen ist. Vorzugsweise ist jedoch vorgesehen, dass der wenigstens eine Anschlag zur Begrenzung der Schwenkbewegung des Schwenkanschlags an dem Basiselement vorgesehen ist.

Dies kann auf verschiedenste Weisen realisiert werden. Nachfolgend wird hierzu ein vorteilhaftes, jedoch nicht ausschließliches Beispiel beschrieben. Vorteilhaft kann vorgesehen sein, dass das Basiselement wenigstens eine winkelige Ausnehmung aufweist, dass die Schenkel der Ausnehmung jeweils einen Anschlag bilden und dass im Bereich wenigstens einer winkeligen Ausnehmung der um eine Schwenkachse drehbar gelagerte Schwenkanschlag angeordnet ist, dessen Schwenkbewegung durch die Schenkel der Ausnehmung begrenzt ist. In das Basiselement ist somit wenigstens eine Ausnehmung integriert, deren beide Begrenzungen jeweils einen Schenkel bilden, die als mechanischer Anschlag für den Schwenkanschlag dienen. Die Schenkel haben einen schrägen Verlauf.

Dabei kann vorgesehen sein, dass sich eine Ausnehmung, vom Mittelpunkt des Basiselements aus gesehen, zu dessen äußeren Ende hin aufweitet. Wenn beispielsweise zwei solcher Ausnehmungen vorgesehen sind, kann ein erster der beiden Ausnehmungen in der genannten Weise ausgebildet sein. Die zweite Ausnehmung ist dann vorteilhaft derart ausgebildet, dass sie sich, von deren äußerem ende aus gesehen, zum Mittelpunkt des Basiselements hin aufweitet. In einem solchen Fall ist der Schwenkanschlag dann vorteilhaft im Bereich der zweiten Ausnehmung vorgesehen und angeordnet.

Durch eine Variation des durch die Schenkel der wenigstens einen winkligen Aufnahme begrenzten Winkels kann die Drehwinkelbegrenzung in gewünschter Weise eingestellt werden. Durch eine entsprechende Ausgestaltung wird es insbesondere möglich, eine Drehwinkelbegrenzung für eine volle 360 Grad Drehung zu schaffen. Eine anders gewählte Öffnung des Winkels würde aber auch einen Winkel von größer oder kleiner als 360 Grad zulassen.

Vorteilhaft kann der Gegenanschlag ortsfest gelagert sein. Dabei erfolgt die Lagerung vorzugsweise ortsfest zur Drehachse des Basiselements. Beispielsweise ist denkbar, dass der Gegenanschlag an einem Gehäuse gelagert beziehungsweise befestigt oder ausgebildet ist. Durch den Abstand des Gegenanschlags zur Schwenkachse des Schwenkanschlags kann die Größe des Winkels der Drehwinkelbegrenzung variiert werden, beispielsweise auch größer als 360 Grad betragen.

Vorzugsweise kann sich der Schwenkanschlag über die äußere Begrenzung des Basiselements hinaus erstrecken. In diesem Fall ist es in erster Linie der über das Basiselement hinausragende Bestandteil des Schwenkanschlags, der mit dem Gegenanschlag zusammenwirkt. Über die Länge des Schwenkanschlags kann die Größe des Winkels der Drehwinkelbegrenzung variiert werden.

In weiterer Ausgestaltung kann der Schwenkanschlag mittels eines Zapfens, eines Bolzens oder einer Schraube drehbar an dem Basiselement angeordnet sein. Natürlich ist die Erfindung nicht auf die genannten Beispiele beschränkt. Wichtig ist lediglich, dass die Befestigung in einer Weise gewählt wird, dass diese eine Schwenkbewegung um die Schwenkachse zulässt.

Wie weiter oben schon ausgeführt wurde, kann das Basiselement auf unterschiedlichste Weise ausgestaltet sein. Beispielsweise, jedoch nicht ausschließlich kann das Basiselement als Scheibe oder als Ring ausgebildet sein. Im letztgenannten Fall begrenzt umgibt Ringkörper eine Ringöffnung. Im Mittelpunkt der Ringöffnung ist dann die Drehachse des Basiselements ausgebildet. Auf dem Ringkörper ist dann der Schwenkanschlag in der zuvor beschriebenen Weise angeordnet.

Vorteilhaft kann der Schwenkanschlag zumindest bereichsweise an die Kontur des Gegenanschlags angepasst sein.

Vorzugsweise kann der Schwenkschlag auch profilförmig ausgebildet sein. Natürlich ist die Erfindung nicht auf bestimmte Profile beschränkt. Diese ergeben sich vielmehr nach dem vorgesehenen Einsatzgebiet für die Vorrichtung zur Drehwinkelbegrenzung, nach der Ausgestaltung des Gegenanschlags und dergleichen. Beispielsweise, jedoch nicht ausschließlich, kann der Schwenkanschlag in Form eines Viereckprofils ausgebildet sein. Ein solches Profil kann zur Verbesserung der Schwenkeigenschaften im Bereich der Schwenkachse eine abgerundete Kontur aufweisen, so dass das viereckige Profil in diesem Fall die Grundkontur bildet.

Durch eine entsprechende Ausgestaltung des Schwenkanschlags, etwa durch die Auswahl einer bestimmten Breite und/oder Länge, wird es insbesondere möglich, eine Drehwinkelbegrenzung für eine volle 360 Grad Drehung zu schaffen. Eine anders gewählte Breite und/oder Länge würde aber auch einen Winkel von größer oder kleiner als 360 Grad zulassen.

Vorteilhaft kann der Schwenkanschlag wenigstens einen Anschlagbereich für den Gegenanschlag aufweisen. Dabei kann insbesondere vorgesehen sein, dass der Anschlagbereich zumindest bereichsweise an die Kontur des Gegenanschlags angepasst ist. Wenn zwei Gegenanschläge vorgesehen sind, und die beiden Gegenanschläge unterschiedlich weit entfernt vom Mittelpunkt des Basiselements aus gesehen angeordnet sind, kann der Anschlagbereich entsprechend angepasst ausgebildet sein.

Beispielsweise kann vorgesehen sein, dass die Drehachse des Basiselements und die Schwenkachse des Schwenkanschlags beabstandet zueinander sind. Dies ist beispielsweise dann der Fall, wenn das Basiselement ringförmig ausgebildet ist. Die Schwenkachse kann auch mit der Drehachse zusammenfallen. Dies kann beispielsweise dann der Fall sein, wenn keine Öffnung in der Mitte des Basiselements benötigt wird. Beispielsweise kann vorgesehen sein, dass die Schwenkachse des Schwenkanschlags, von dessen freiem Ende aus gesehen, vor der Drehachse des Basiselements liegt. In anderer Ausgestaltung kann aber auch vorgesehen sein, dass die Schwenkachse vom freien Ende des Schwenkanschlags aus gesehen hinter der Drehachse liegt. Im letztgenannten Fall erstreckt sich der Schwenkanschlag über das Basiselement hinweg und vorzugsweise durch die Drehachse des Basiselements hindurch. Wenn das Basiselement ringförmig ausgebildet ist, erstreckt sich der Schwenkanschlag durch die Ringöffnung des ringförmigen Basiselements.

Besonders vorteilhaft kann die Vorrichtung zur Drehwinkelbegrenzung zur Drehwinkelbegrenzung für eine Drehung um wenigstens 360 Grad ausgebildet sein.

Eine wie vorstehend beschriebene Vorrichtung zur Drehwinkelbegrenzung kann im Zusammenhang mit den unterschiedlichsten technischen Gebieten verwendet werden. Vorteilhaft kann diese im Bereich der Medizintechnik zum Einsatz kommen, beispielsweise bei Operationsmikroskopen.

Gemäß einem weiteren Aspekt der Erfindung wird eine optische Beobachtungseinrichtung, insbesondere ein Mikroskop, bereitgestellt, aufweisend eine wie vorstehend beschriebene erfindungsgemäße Vorrichtung zur Drehwinkelbegrenzung, auf deren Basiselement wenigstens eine Komponente der Beobachtungseinrichtung drehbar und drehwinkelbegrenzt gelagert ist.

Zur Vermeidung von Wiederholungen wird an dieser Stelle auf die vorstehenden Ausführungen zur erfindungsgemäßen Vorrichtung zur Drehwinkelbegrenzung vollinhaltlich Bezug genommen und hiermit verwiesen.

Die erfindungsgemäße Vorrichtung kann vorteilhaft auf unterschiedliche Weise verwendet werden. Beispielsweise kann eine solche Vorrichtung zur drehbaren und drehbegrenzten Lagerung einer Komponente eines Mikroskops, insbesondere eines Operationsmikroskops, verwendet werden. In anderer Ausgestaltung kann eine solche Vorrichtung beispielsweise auch als Aufhängung innerhalb eines Mikroskops, insbesondere eines Operationsmikroskops -etwa eines ophtalmologischen Mikroskops - verwendet werden.

Die Erfindung wird nun anhand eines Ausführungsbeispiels unter Bezugnahme auf die beiliegenden Zeichnungen näher erläutert. Dabei zeigen
- Figur 1: eine perspektivische Ansicht eines ersten Ausführungsbeispiels einer erfindungsgemäßen Vorrichtung zur Drehwinkelbegrenzung eines drehbar gelagerten Objekts;
- Figur 2: eine Draufsicht auf die in Figur 1 dargestellte Vorrichtung mit einem 0 Grad Anschlag des Schwenkanschlags;
- Figur 3: eine Draufsicht auf die in Figur 1 dargestellte Vorrichtung mit einem 360 Grad Anschlag des Schwenkanschlags; und
- Figur 4: eine Draufsicht auf ein zweites Ausführungsbeispiel einer erfindungsgemäßen Vorrichtung zur Drehwinkelbegrenzung.

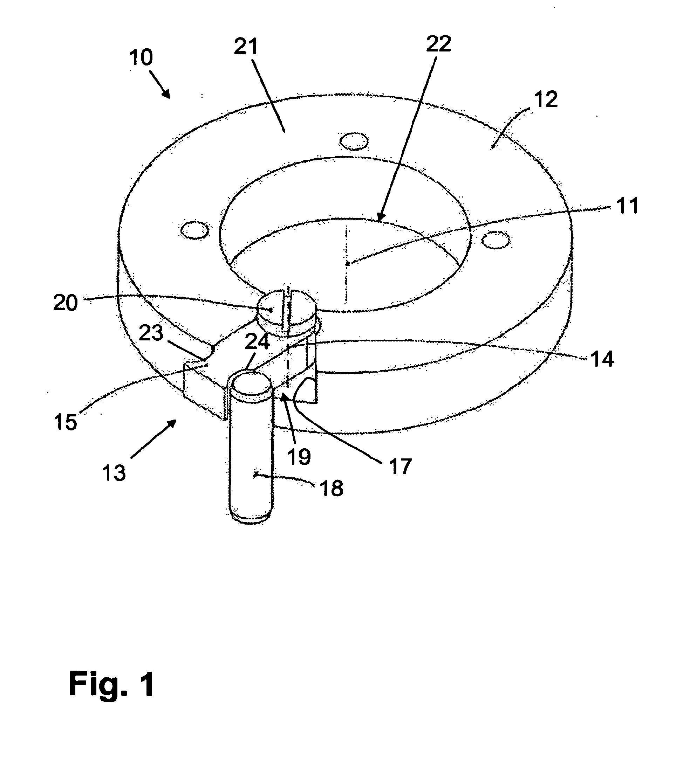

In den Figuren 1 bis 3 ist eine Vorrichtung 10 zur Drehwinkelbegrenzung dargestellt. Die Vorrichtung 10 weist zunächst ein ringförmiges Basiselement 12 auf, das um eine Drehachse 11 gelagert ist. Das Basiselement 12 besteht aus einem Ringkörper 21, auf beziehungsweise an dem ein zu drehendes Objekt (nicht dargestellt) befestigt werden kann. Der Ringkörper 21 umgibt eine Ringöffnung 22, in deren Mittelpunkt sich die Drehachse 11 befindet. Sobald das Basiselement 12 um die Drehachse 11 gedreht wird, wird in gleicher Weise auch das zu drehende Objekt mitgedreht.

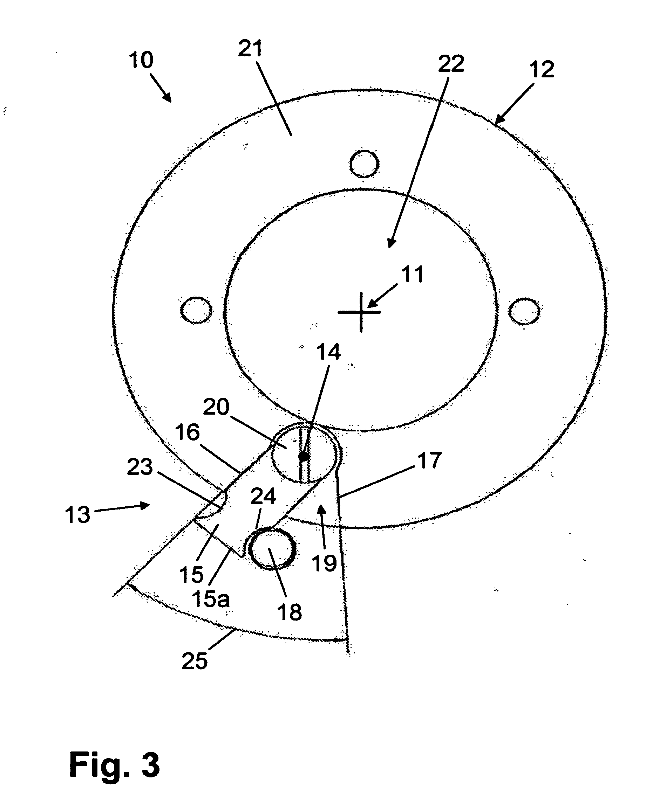

Um zu gewährleisten, dass die Drehung des Basiselements begrenzt werden kann, beispielsweise auf eine volle 360 Grad Drehung, verfügt die Vorrichtung 10 über eine Einrichtung 13 zur Drehwinkelbegrenzung. Diese Einrichtung 13 besteht aus einer Reihe von Bauelementen. Zunächst verfügt die Einrichtung 13 über eine winkelige Ausnehmung 19, die im Ringkörper 21 des Basiselements 12 ausgebildet ist. Die winkelige Ausnehmung 19 ist von zwei Schenkeln 16, 17 begrenzt, die jeweils einen Anschlag für einen Schwenkanschlag 15 bilden. Die winkelige Ausnehmung 19 ist derart gestaltet, dass sie sich, von der Drehachse 11 aus gesehen, zum äußeren Rand des Ringkörpers 21 hin aufweitet, und zwar um einen von der winkeligen Ausnehmung eingeschlossenen Winkel 25 (Figur 3).

In der winkeligen Ausnehmung 19 ist ein um eine Schwenkachse 14 schwenkbar gelagerter Schwenkanschlag 15 vorgesehen, der mittels einer Schraube 20 schwenkbar um die Schwenkachse 14 am Basiselement 12 befestigt ist. Der Schwenkanschlag 15 ist in Form eines viereckigen Profils ausgebildet, wobei sich ein Teil des Schwenkanschlags 15 über den äußeren Rand des Basiselements 12 hinaus erstreckt. Der Schwenkanschlag 15 wirkt mit einem Gegenanschlag 18 zusammen, der beispielsweise ortsfest an einem Gehäuse (nicht dargestellt) angeordnet sein kann. Im Bereich des freien Endes des Schwenkanschlags 15, das sich über den äußeren Rand des Basiselements 12 hinaus erstreckt, sind Anschlagbereiche 23, 24 für den Gegenanschlag vorgesehen, die an die Kontur des Gegenanschlags 18 angepasst sind.

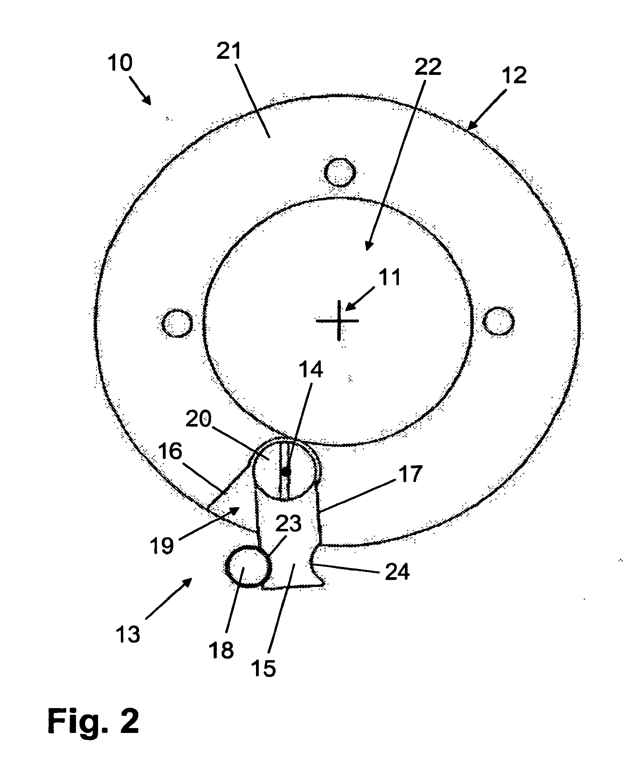

In der Figur 2 ist eine Situation dargestellt, die einem 0 Grad Anschlag entspricht. In Figur 3 ist eine Situation dargestellt, die einem 360 Grad Anschlag entspricht. Durch die Ausgestaltung der Einrichtung 13 zur Drehwinkelbegrenzung kann dabei sichergestellt werden, dass die physische Breite des Schwenkanschlags 15 kompensiert werden kann, so dass die Drehung des Basiselements 12 auf volle 360 Grad begrenzt werden kann.

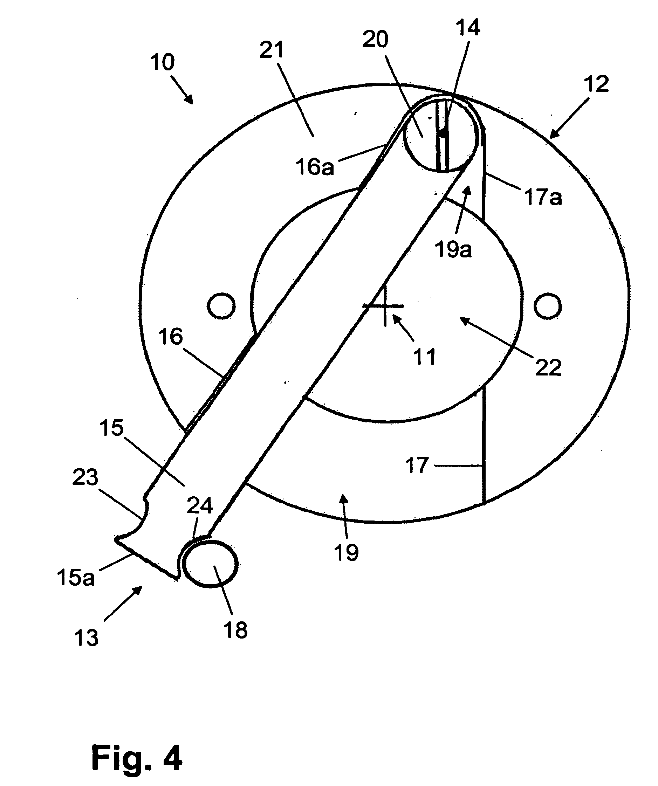

In der Figur 4 ist ein weiteres Ausführungsbeispiel einer erfindungsgemäßen Vorrichtung 10 zur Drehwinkelbegrenzung dargestellt. Die einzelnen Bauteile entsprechen dabei den Bauteilen des in den Figuren 1 bis 3 dargestellten Ausführungsbeispiels, so dass gleiche Bauteile mit identischen Bezugsziffern versehen sind. Bezüglich des Grundaufbaus wird weiterhin auf die Ausführungen zu den Figuren 1 bis 3 vollinhaltlich Bezug genommen und verwiesen.

Der Hauptunterschied zwischen der in den Figuren 1 bis 3 dargestellten Vorrichtung 10 und der Vorrichtung 10 gemäß Figur 4 besteht darin, dass der Schwenkanschlag 15 in Figur 4 anders am Basiselement 12 befestigt ist. Bei dem in den Figuren 1 bis 3 dargestellten Ausführungsbeispiel ist vorgesehen, dass der Schwenkanschlag 15 derart am Basiselement 12 angeordnet ist, dass die Schwenkachse 14 des Schwenkanschlags 15, vom freien Ende 15a (siehe Figur 3) des Schwenkanschlags 15 aus gesehen, vor der Drehachse 11 des Basiselements 12 liegt. Bei dem Ausführungsbeispiel gemäß Figur 4 indes liegt die Schwenkachse 14 des Schwenkanschlags 15, von dessen freiem Ende 15a aus gesehen, hinter der Drehachse 11 des Basiselements 12.

Die in Figur 4 dargestellte Vorrichtung 10 zur Drehwinkelbegrenzung weist zwei winkelige Ausnehmungen 19, 19a auf (in den Figuren 1 bis 3 ist nur eine winkelige Ausnehmung 19 vorgesehen), deren Schenkel jeweils entsprechende Anschläge 16, 16a beziehungsweise 17, 17a zur Begrenzung der Schwenkbewegung des Schwenkanschlags 15 bilden. Der Schwenkanschlag 15 erstreckt sich über das Basiselement 12, und insbesondere über die Ringöffnung 22 und die Drehachse 11. Der Vorteil einer solchen Ausgestaltung ist, dass die winkelige Ausnehmung 19, die in der Umgebung des Gegenanschlags 18 vorgesehen ist größer ausgestaltet werden kann. Weiterhin kann auch der Bereich des Schwenkanschlags 15, der sich über die äußere Begrenzung des Basiselements 12 hinaus erstreckt, größer ausgestaltet werden. Mit einer wie in Figur 4 dargestellten Vorrichtung lässt sich somit auf vorteilhafte Weise eine Drehwinkelbegrenzung für Winkel von größer als 360 Grad realisieren.

### Bezugszeichenliste

- 10: Vorrichtung zur Drehwinkelbegrenzung
- 11: Drehachse
- 12: Basiselement
- 13: Einrichtung zur Drehwinkelbegrenzung
- 14: Schwenkachse
- 15: Schwenkanschlag
- 15a: Freies Ende des Schwenkanschlags
- 16: Anschlag zur Begrenzung der Schwenkbewegung des Schwenkanschlags
- 16a: Anschlag zur Begrenzung der Schwenkbewegung des Schwenkanschlags
- 17: Anschlag zur Begrenzung der Schwenkbewegung des Schwenkanschlags
- 17: Anschlag zur Begrenzung der Schwenkbewegung des Schwenkanschlags
- 18: Gegenanschlag
- 19: Winkelige Ausnehmung
- 19a: Winkelige Ausnehmung
- 20: Schraube
- 21: Ringkörper
- 22: Ringöffnung
- 23: Anschlagbereich im Schwenkanschlag für den Gegenanschlag
- 24: Anschlagbereich im Schwenkanschlag für den Gegenanschlag
- 25: Der von der winkeligen Ausnehmung eingeschlossene Winkel

## Patentansprüche

1. Vorrichtung (10) zur Drehwinkelbegrenzung eines drehbar gelagerten Objekts, aufweisend ein um eine Drehachse (11) drehbar gelagertes Basiselement (12) zur Aufnahme eines zu drehenden Objekts, sowie eine Einrichtung (13) zur Drehwinkelbegrenzung, **dadurch gekennzeichnet, dass** die Einrichtung (13) zur Drehwinkelbegrenzung einen um eine Schwenkachse (14) drehbar gelagerten Schwenkanschlag (15) aufweist, der auf dem Basiselement (12) angeordnet ist, dass die Einrichtung (13) zur Drehwinkelbegrenzung zwei oder mehr Anschläge (16, 17; 16a, 17a) zur Begrenzung der Schwenkbewegung des Schwenkanschlags (15) aufweist und dass die Einrichtung (13) zur Drehwinkelbegrenzung wenigstens einen Gegenanschlag (18) aufweist, der mit dem Schwenkanschlag (15) zusammenwirkt.

2. Vorrichtun nach Anspruch 1, **dadurch gekennzeichnet, dass** die Anschläge (16, 17; 16a, 17a) zur Begrenzung der Schwenkbewegung des Schwenkanschlags (15) an dem Basiselement (12) vorgesehen Sind.

3. Vorrichtung nach Anspruch 1 oder 2, **dadurch gekennzeichnet, dass** das Basiselement (12) wenigstens eine winkelige Ausnehmung (19; 19a) aufweist, dass die Schenkel der Ausnehmung (19; 19a) jeweils einen Anschlag (16, 17; 17, 17a) bilden und dass im Bereich wenigstens einer winkeligen Ausnehmung (19; 19a) der um eine Schwenkachse (14) drehbar gelagerte Schwenkanschlag (15) angeordnet ist, dessen Schwenkbewegung durch die Schenkel (16, 17; 16a, 17a) der wenigstens einen Ausnehmung (19;19a) begrenzt ist.

4. Vorrichtung nach einem der Ansprüche 1 bis 3, **dadurch gekennzeichnet, dass** der wenigstens eine Gegenanschlag (18) ortsfest zur Drehachse (11) gelagert ist.

5. Vorrichtung nach einem der Ansprüche 1 bis 4, **dadurch gekennzeichnet, dass** sich der Schwenkanschlag (15) über die äußere Begrenzung des Basiselements (12) hinaus erstreckt.

6. Vorrichtung nach einem der Ansprüche 1 bis 5, **dadurch gekennzeichnet, dass** der Schwenkanschlag (15) mittels eines Zapfens, eines Bolzens oder einer Schraube (20) drehbar an dem Basiselement (12) angeordnet ist.

7. Vorrichtung nach einem der Ansprüche 1 bis 6, **dadurch gekennzeichnet, dass** das Basiselement (12) ringförmig ausgebildet ist.

8. Vorrichtung nach einem der Ansprüche 1 bis 7, **dadurch gekennzeichnet, dass** der Schwenkanschlag (15) zumindest bereichsweise an die Kontur des wenigstens einen Gegenanschlags (18) angepasst ist.

9. Vorrichtung nach einem der Ansprüche 1 bis 8, **dadurch gekennzeichnet, dass** der Schwenkanschlag (15) wenigstens einen Anschlagbereich (23, 24) für den wenigstens einen Gegenanschlag (18) aufweist.

10. Vorrichtung nach einem der Ansprüche 1 bis 9, **dadurch gekennzeichnet, dass** die Drehachse (11) des Basiselements (12) und die Schwenkachse (14) des Schwenkanschlags (15) beabstandet zueinander sind, oder dass die Drehachse (11) des Basiselements (12) und die Schwenkachse (14) des Schwenkanschlags (15) zusammenfallen.

11. Vorrichtung nach einem der Ansprüche 1 bis 10, **dadurch gekennzeichnet, dass** diese zur Drehwinkelbegrenzung für eine Drehung um wenigstens 360 Grad ausgebildet ist.

12. Optische Beobachtungseinrichtung, insbesondere Mikroskop, aufweisend eine Vorrichtung (10) zur Drehwinkelbegrenzung nach einem der Ansprüche 1 bis 11, auf deren Basiselement (12) wenigstens eine Komponente der Beobachtungseinrichtung drehbar und drehwinkelbegrenzt gelagert ist.

13. Verwendung einer Vorrichtung (10) zur Drehwinkelbegrenzung nach einem
der Ansprüche 1 bis 11 zur drehbaren und drehbegrenzten Lagerung einer Komponente eines Mikroskops, insbesondere eines Operationsmikroskops.

14. Verwendung einer Vorrichtung (10) zur Drehwinkelbegrenzung nach einem
der Ansprüche 1 bis 11 als Aufhängung innerhalb eines Mikroskops, insbesondere eines Operationsmikroskops.

## Claims

1. Device (10) for limiting the turning angle of a rotatably mounted object, comprising a base element (12) rotatably mounted about a rotation axis (11) for receiving an object that is to be rotated, and a means (13) for limiting the turning angle, **characterised in that** the means (13) for limiting the turning angle comprises a pivot stop (15) arranged on the base element (12) and mounted to rotate about a pivot axis (14), **in that** the means (13) for limiting the turning angle comprises two or more stops (16, 17; 16a, 17a) for limiting the pivoting movement of the pivot stop (15) and **in that** the means (13) for limiting the turning angle comprises at least one counter-stop (18) which cooperates with the pivot stop (15).

2. Device according to claim 1, **characterised in that** the stops (16, 17; 16a, 17a) for limiting the pivoting movement of the pivot stop (15) are provided on the base element (12).

3. Device according to claim 1 or 2, **characterised in that** the base element (12) comprises at least one angular recess (19; 19a), **in that** the side pieces of the recess (19, 19a) each form a stop (16, 17; 17, 17a) and that the pivot stop (15) that is mounted to rotate about a pivot axis (14) is arranged in the region of at least one angular recess (19; 19a), the pivoting movement of said pivot stop (15) being limited by the side pieces (16, 17; 17, 17a) of the at least one recess (19; 19a).

4. Device according to one of claims 1 to 3, **characterised in that** the at least one counter-stop (19) is mounted in a fixed position relative to the rotation axis (11).

5. Device according to one of claims 1 to 4, **characterised in that** the pivot stop (15) extends beyond the outer boundary of the base element (12).

6. Device according to one of claims 1 to 5, **characterised in that** the pivot stop (15) is rotatably mounted on the base element (12) by means of a pin, a bolt or a screw (20).

7. Device according to one of claims 1 to 6, **characterised in that** the base element (12) is of annular configuration.

8. Device according to one of claims 1 to 7, **characterised in that** the pivot stop (15) is adapted, at least in part, to the contour of the at least one counter-stop (18).

9. Device according to one of claims 1 to 8, **characterised in that** the pivot stop (15) comprises at least one stop region (23, 24) for the at least one counter-stop (18).

10. Device according to one of claims 1 to 9, **characterised in that** the rotation axis (11) of the base element (12) and the pivot axis (14) of the pivot stop (15) are spaced from one another, or **in that** the rotation axis (11) of the base element (12) and the pivot axis (14) of the pivot stop (15) coincide.

11. Device according to one of claims 1 to 10, **characterised in that** the device is designed to limit the turning angle for a rotation through at least 360 degrees.

12. Optical observation device, particularly a microscope, comprising a device (10) for limiting the turning angle according to one of claims 1 to 11, on the base element (12) of which is mounted at least one component of the observation device in such a way as to be rotatable and limited in its turning angle.

13. Use of a device (10) for limiting the turning angle according to one of claims 1 to 11 for the rotatable and rotation-limited mounting of a component of a microscope, particularly an operating microscope.

14. Use of a device (10) for limiting the turning angle according to one of claims 1 to 11 as a suspended device within a microscope, particularly an operating microscope.

## Revendications

1. Dispositif (10) de limitation d'angle de rotation d'un objet installé de manière rotative, présentant un élément de base (12) installé de manière rotative autour d'un axe de rotation (11) pour la réception d'un objet destiné à être mis en rotation, ainsi qu'un dispositif (13) de limitation d'angle de rotation, **caractérisé en ce que** le dispositif (13) de limitation d'angle de rotation présente une butée de pivotement (15) installée de manière rotative autour d'un axe de pivotement (14) qui est disposé sur l'élément de base (12), **en ce que** le dispositif (13) de limitation d'angle de rotation présente deux ou plusieurs butées (16, 17 ; 16a, 17a) pour la limitation du mouvement de pivotement de la butée de pivotement (15) et **en ce que** le dispositif (13) de limitation d'angle de rotation présente au moins une contrebutée (18), qui coopère avec la butée de pivotement (15).

2. Dispositif selon la revendication 1, **caractérisé en ce que** les butées (16, 17 ; 16a, 17a) pour la limitation du mouvement de pivotement de la butée de pivotement (15) sont prévues sur l'élément de base (12).

3. Dispositif selon la revendication 1 ou 2, **caractérisé en ce que** l'élément de base (12) présente au moins un évidement angulaire (19 ; 19a), **en ce que** les côtés de l'évidement (19 ; 19a) forment à chaque fois une butée (16, 17 ; 16a, 17a) et **en ce que** la contrebutée de pivotement (15), installée de manière rotative autour d'un axe de pivotement (14), dont le mouvement de pivotement est limité par les côtés (16, 17 ; 16a, 17a) de l'au moins un évidement (19 ; 19a), est disposée dans la zone d'au moins un évidement angulaire (19, 19a) .

4. Dispositif selon l'une quelconque des revendications 1 à 3, **caractérisé en ce que** la au moins une contrebutée (18) est installée de manière stationnaire par rapport à l'axe de rotation (11).

5. Dispositif selon l'une quelconque des revendications 1 à 4, **caractérisé en ce que** la butée de pivotement (15) se prolonge jusqu'au-delà de la limite externe de l'élément de base (12).

6. Dispositif selon l'une quelconque des revendications 1 à 5, **caractérisé en ce que** la butée de pivotement (15) est disposée de manière rotative sur l'élément de base (12) à l'aide d'un tourillon, d'un boulon ou d'une vis (20).

7. Dispositif selon l'une quelconque des revendications 1 à 6, **caractérisé en ce que** l'élément de base (12) se présente sous la forme d'un anneau.

8. Dispositif selon l'une quelconque des revendications 1 à 7, **caractérisé en ce que** la butée de pivotement (15) est adaptée au moins partiellement au contour d'au moins une contrebutée (18).

9. Dispositif selon l'une quelconque des revendications 1 à 8, **caractérisé en ce que** la butée de pivotement (15) présente au moins une zone de butée (23, 24) pour la au moins une contrebutée (18).

10. Dispositif selon l'une quelconque des revendications 1 à 9, **caractérisé en ce que** l'axe de rotation (11) de l'élément de base (12) et l'axe de pivotement (14) de la butée de pivotement (15) sont situés à un certain écart l'un de l'autre ou **en ce que** l'axe de rotation (11) de l'élément de base (12) et l'axe de pivotement (14) de la butée de pivotement (15) coïncident.

11. Dispositif selon l'une quelconque des revendications 1 à 10, **caractérisé en ce que** celle-ci est réalisée pour la limitation d'angle de rotation pour une rotation d'au moins 360 degrés.

12. Dispositif d'observation optique, en particulier microscope, présentant un dispositif (10) de limitation d'angle de rotation selon l'une quelconque des revendications 1 à 11, sur l'élément de base (12) duquel est installé, de manière rotative ou d'une manière limitée en rotation, au moins un composant du dispositif d'observation optique.

13. Utilisation d'un dispositif (10) de limitation d'angle de rotation selon l'une quelconque des revendications 1 à 11 pour l'installation permettant la rotation et la limitation de rotation d'un composant de microscope, en particulier d'un microscope pour opérations chirurgicales.

14. Utilisation d'un dispositif (10) de limitation d'angle de rotation selon l'une quelconque des revendications 1 à 11 en tant que dispositif porteur au sein d'un microscope, en particulier d'un microscope pour opérations chirurgicales.
